# EUROPEAN PATENT SPECIFICATION

(11) **EP 2 624 645 B1**
(45) Date of publication and mention of the grant of the patent: **28.02.2018**
(21) Application number: 11870887.4
(22) Date of filing: 12.08.2011
(51) Int. Cl.: H04W 36/00, H04W 68/12, H04W 60/04

(54) **SUSPENDING AND RESUMING PACKET SWITCHED SERVICE**
AUSSETZEN UND FORTSETZEN EINES PAKETVERMITTLUNGSDIENSTES
SUSPENDRE ET RÉTABLIR UN SERVICE DE COMMUTATION DE PAQUETS

(43) Date of publication of application: 07.08.2013
(73) Proprietor: Spreadtrum Communications (Shanghai) Co., Ltd., Shanghai 201203 (CN)
(72) Inventor: ZHANG, Zhi, Shanghai 201203 (CN); LIU, Jiwu, Shanghai 201203 (CN); CHEN, Xianliang, Shanghai 201203 (CN); GAO, Xichun, Shanghai 201203 (CN); XU, Yuan, Shanghai 201203 (CN); LU, Wenbo, Shanghai 201203 (CN); ZHANG, Ma, Shanghai 201203 (CN); HU, Yingping, Shanghai 201203 (CN)
(74) Representative: Westphal, Mussgnug & Partner Patentanwälte mbB
(86) International application number: PCT/CN2011/078339
(87) International publication number: WO 2013/023341

(56) References cited:
- WO-A1-2006/137762
- WO-A1-2010/122029
- WO-A1-2010/128200
- CN-A- 101 500 212
- CN-A- 101 690 358
- GB-A- 2 419 258
- US-A1- 2011 122 809
- US-A1- 2011 122 862

## Description

### Field of the Invention

The present invention relates to communication techniques, and more particular, to a service processing method, a baseband processor chip and a terminal.

### Description of the Related Art

In the 3rd Generation Partnership Project (3GPP) TS 22.060 specification, according to the types of services offered, General Packet Radio Service (GPRS) terminals are divided into Class A, Class B, and Class C, to distinguish their capabilities of handover between a GPRS data service and a Global System for Mobile Communication (GSM) voice service.

Wherein, a terminal of Class A can be attached to a GPRS network and a GSM network simultaneously, and supports the concurrent operation of a packet switched (PS) domain service and a GSM voice service. It is possible to browse a network and receive/send an email while a voice call is proceeding, that is, voice calling and data transmission can be performed simultaneously.

A terminal of class B can be attached to a GPRS network and a GSM network simultaneously, but it does not support the concurrent operation of a PS domain service and a GSM voice service, and can only operate one service at a certain time. Handover between a PS domain service and a GSM voice service can be realized through signaling. For example, PS domain data transmission is temporarily suspended when a call request is initiated by a terminal user, and is resumed after the completion of the call. However, in existing networks, a terminal of Class B is unable to receive a GSM service message, such as a voice call or a SMS message while receiving a PS domain data transmission.

A terminal of Class C only supports PS domain services but not GSM voice services. A terminal of Class C is primarily applied in a GPRS modem, and is not used for PS domain service requests.

The operation of a terminal of Class A needs a large amount of Central Processing Unit (CPU) bandwidth, which results in high cost and expensive price. Accordingly, terminals of Class A are uncommon on the current market. Terminals of Class C are not suitable for PS domain service requests, and thus most of the GPRS terminals available on the current market are terminals of Class B.

During the realization of this invention, the inventors have found that existing terminals of Class B have at least the following problems:
Because a terminal of Class B does not support the concurrent processing of a PS domain service and a Circuit Switched (CS) domain service, when the terminal of Class B is engaged in a continuous reception/transmission of PS domain data during the process of a PS domain service, it is unable to process a CS domain service.

For example, when a terminal of Class B is continuously receiving PS domain data, if a calling user makes a call to a called user, the call request can not be admitted to the called terminal, and the called terminal does not present any prompt except to the called user while the calling terminal will receive a prompt that "the number you dialed is engaged", which may impacts the success admission rate of a GMS voice service consequently. In practice applications, even if the called user has turned on a missed call reminder service, because SMS and the voice service both belong to CS domain services, during the continuous reception of PS domain data by the called terminal, the missed call reminder platform is unable to send a SMS message notifying an incoming call to the called terminal, and until the called terminal has stopped receiving the PS domain data, the missed call reminder platform can send to the called terminal the SMS message, notifying the called user of the calling number, the calling time and other information of that call the SMS message. If the missed call reminder service is not turned on, the called user cannot be informed about the missed call at all, leading to serious impacts on user experience about the service.

CN1010690358A recites a method and apparatus that are provided for handling a paging request for a Circuit Switched session, when the paging request is intended for a terminal attached to a Packet Switched cell in a radio access network and having one or more ongoing Packet Switched sessions. The request is received at a node in the radio access or core network to establish a Circuit Switched session with the terminal whilst the terminal has one or more ongoing Packet Switched sessions. The importance of the ongoing Packet Switched session is determined at the node, and the paging request is rejected if any of the ongoing Packet Switched sessions is more important than the Circuit Switched session. The node may be a MME, an eNodeB or the terminal itself.

### SUMMARY OF THE INVENTION

The technical problem to be addressed in embodiments of this invention is to provide a service processing method, a baseband processor chip and a terminal, enabling a terminal of Class B to process a CS domain service during the reception/transmission of PS domain data.

In order to address the above technique problems, a service processing method is provided, comprising:
in response to that a terminal needs to process a CS domain service, identifying whether PS domain data that is being received/transmitted in a PS domain service currently processed on the terminal is critical data for maintaining the QoS level of the PS domain service, wherein The critical data is used to maintain the QoS level of the PS domain service, wherein the PS domain service can not be continued or the data transmission rate has a significant decrease if the critical data is lost, and wherein a need for processing a CS domain service comprises: a time for receiving a paging message as specified by a paging period arriving, or a paging indicator indicating it is required to receive a paging message, or a time for receiving a broadcast message or a time for performing location area update according to a time interval specified in a communication protocol arriving;
in response to that the PS domain data received/transmitted is not critical data, suspending the PS domain service and processing the CS domain service, wherein processing the CS domain service correspondingly comprises: receiving and processing a CS domain paging message, receiving and processing the broadcast message, or performing location area update for the user card of the terminal; and
the processing of the PS domain service is resumed after the processing of the CS domain service.

A baseband processor chip is provided in an embodiment of this invention, comprising:
a first service processing unit for processing a CS domain service;
a second service processing unit for processing a PS domain service;
a monitor unit for monitoring whether the first service processing unit needs to process a CS domain service, wherein a need for processing a CS domain service comprises: a time for receiving a paging message as specified by a paging period arriving, or a paging indicator indicating it is required to receive a paging message, or a time for receiving a broadcast message or a time for performing location area update according to a time interval specified in a communication protocol arriving;
an identification unit for, according to a monitor result of the monitor unit, in response to that the first service processing unit needs to process a CS domain service, identifying whether PS domain data that is being received/transmitted in a PS domain service currently processed by the second service processing unit is critical data for maintaining the QoS level of the PS domain service, wherein The critical data is used to maintain the QoS level of the PS domain service, wherein the PS domain service can not be continued or the data transmission rate has a significant decrease if the critical data is lost;
a scheduling unit for, according to an identification result of the identification unit, in response to that the PS domain data received/transmitted is not critical data, instructing the second service processing unit to suspend the processing of the PS domain service and instructing a first service processing unit to process the CS domain service, wherein processing the CS domain service correspondingly comprises: receiving and processing a CS domain paging message, receiving and processing the broadcast message, or performing location area update for the user card of the terminal, wherein the scheduling unit is further used to after the CS domain service has been processed by the first service processing unit, instruct the second service processing unit to resume the processing of the PS domain service.

A mobile terminal is provided in an embodiment of this invention, comprising a RF chip and a baseband processor chip as described above.

Based on the service processing method, the baseband processor chip and the terminal provided in the above embodiments of this invention, when a terminal requires to process a CS domain service, whether PS domain data being received/transmitted in a currently processed PS domain service is critical data for maintaining the QoS Level of the PS domain service is identified, if the PS domain data being received/transmitted is not critical data, the processing of the PS domain service is suspended and the CS domain service is processed. The problem of unable to process a CS domain service during the processing of a PS domain service on a terminal of Class B in the prior art can be solved. As compared to the prior art, the terminal of Class B is enabled to process a CS domain service during its reception/transmission of PS domain data, so that user experiment about the CS domain service and the QoS level of the CS domain service can be improved; in addition, because the PS domain data being received/transmitted is not critical data, suspending the processing of the current PS domain service will not cause the degradation in QoS level of the PS domain service, such as, a break of the PS domain service or a significant decrease in data transmission speed of PS domain data.

The technical solution of this invention will be further described below with reference to accompanying drawings and embodiments.

### BRIEF DESCRIPTION OF THE DRAWINGS

For a more explicit description of the technical solutions of embodiments of this invention or in the prior art, a brief introduction of accompanying drawings to be used in the description of these embodiments or the prior art will be given below. Obviously, accompanying drawings described below are merely some embodiments of this invention, for those skilled in the art, other accompanying drawings can be derived from these ones without any creative efforts.
Fig.1 is a flowchart of a service processing method according to an embodiment of this invention;
Fig.2 is a flowchart of a service processing method according to another embodiment of this invention;
Fig.3 is a flowchart of a service processing method according to still another embodiment of this invention;
Fig.4 is a flowchart of a service processing method according to still another embodiment of this invention;
Fig.5 is a schematic structure diagram of a baseband processor chip according to an embodiment of this invention;
Fig.6 is a schematic structure diagram of a terminal according to an embodiment of this invention.

### DESCRIPTION OF THE EMBODIMENTS

A clear and complete description of technical solutions of embodiments of this invention will be given with reference to the accompanying drawings of the embodiments of this invention. Obviously, embodiments described herein are merely some embodiments of this invention, but not all of them. Based on those embodiments of this invention, other embodiments can occur to those skilled in the art without any creative efforts, all of which fall within the scope of this invention.

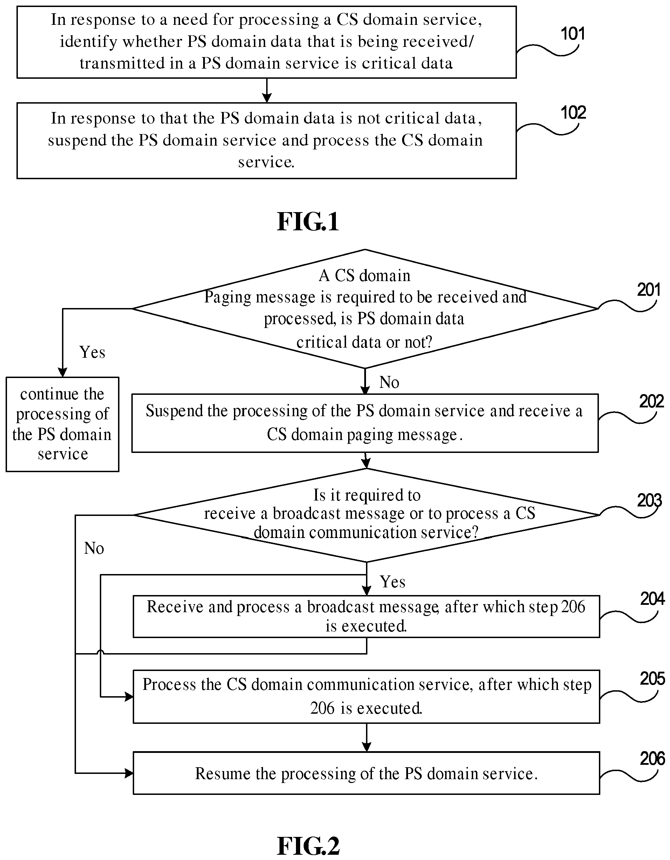

Fig.1 is a flowchart of a service processing method according to an embodiment of this invention. As shown in Fig.1, the service processing method of this embodiment comprises the following steps:
101. In response to that a terminal needs to process a CS domain service, identifying whether PS domain data that is being received/transmitted in a PS domain service currently processed by the terminal is critical data for maintaining a QoS level of the PS domain service.

In various embodiments of this invention, the CS domain service may be any CS domain service in various existing communication networks, for example, a CS domain service in a GSM network, including but not limited to, a calling service, such as a voice calling and video calling service, a short message service, and a multimedia service, etc.

The PS domain service herein may be a download or upload service on a mobile communication network, including the reception/transmission of PS domain data, such as instant messaging, webpage browse, multimedia message sending and download, etc. The critical data is used to maintain the QoS level of the PS domain service, for example data for continuing the PS domain service or keeping the PS domain data transmission rate thereof, wherein the PS domain service can not be continued or the data transmission rate may have a significant decrease if the critical data is lost. In a particular application, the critical data may be data specified in a communication protocol, or user-specified data, for example uplink polling data transmitted by a GSM terminal, particular signaling involved in a PS domain service specified in a communication protocol or by a user.
102. In response to that the PS domain data being received/transmitted is not critical data, suspend the processing of the PS domain service and processing the CS domain service.

In the service processing method provided in the above embodiment, when a terminal requires to process a CS domain service, whether PS domain data that is being received/transmitted in a PS domain service currently processed is critical data for maintaining the QoS level of the PS domain service is identified, if the PS domain data that is being received/transmitted is not critical data, the processing of the PS domain service is suspended and the CS domain service is processed, thereby enabling a terminal of Class B to process the CS domain service during the reception/transmission of the PS domain data, so that service quality and user experiment about the CS domain service can be improved; in addition, because the PS domain data that is being received/transmitted is not critical data, suspending the processing of the current PS domain service will not cause the degradation in QoS level of the PS domain service, such as, a break of the PS domain service or a significant decrease in data transmission speed thereof, so that the service quality of the PS domain service can be effectively guaranteed.

Furthermore, as another particular embodiment of this invention, with the embodiment shown in Fig.1, after the processing of the CS domain service, the processing of the PS domain service can be resumed to avoid a break in the data service or data loss, and thus to achieve the continuousness of the PS domain service.

Further, as another particular embodiment of this invention, the reception/transmission of critical data is prior to the processing of the CS domain service. Then, in the embodiment of the invention shown in Fig.1, if the PS domain data that is being received/transmitted is critical data, the processing of the PS domain service is continued to receive/transmit the PS domain data, and no CS domain service is processed during the reception/transmission of critical data.

The CS domain service in this embodiment of the invention includes, but not limited to, a CS domain paging message, a broadcast message, a location area update, etc. Correspondingly, the need for processing the CS domain service by the terminal may particularly comprise: a need for receiving a CS domain service message by the terminal, such as a CS domain paging message, a broadcast message, or a need for processing a specific CS domain service, for example, a service such as location area updating. Processing the CS domain service may correspondingly comprise: receiving and processing a CS domain paging message, receiving and processing a broadcast message, performing location area update for a user card of the terminal and etc. According to a particular embodiment of this invention, the criteria of requiring a CS domain paging message to be received may comprise: reaching a paging message receiving time specified by a paging period, or a paging indictor indicates the requirement of receiving a paging message. According to this embodiment, the terminal is believed to receive and process a CS domain paging message when it is the time to receive a paging message as specified by a paging period, or when it is required to receive a paging message as indicated by a paging indicator.

For example, in GSM, a terminal requires to receive a paging message on a paging indicator channel (PICH) at a time for paging message reception specified by a paging period, when the terminal in the embodiment of this invention is a GSM terminal, a CS domain paging message is required to be received and processed when it is the time to receive a paging message as specified by a paging period.

Fig.2 is a flowchart of a service processing method according to another embodiment of this invention. In this embodiment, a description will be given, in which the CS domain service is a CS domain paging message as an example. As shown in Fig.2, the service processing method of this embodiment comprises the following steps:
201. In response to that a terminal needs to receive and process a CS domain paging message, identify whether PS domain data that is being received/transmitted in a PS domain service currently processed by the terminal is critical data for maintaining a QoS level of the PS domain service. If the PS domain data that is being received/transmitted is not critical data, step 202 is executed; otherwise, if the PS domain data that is being received/transmitted is critical data, the processing of the PS domain service is continued.
202. Suspend the PS domain service and receive the CS domain paging message.
203. According to information within the CS domain paging message, identify whether a broadcast message is required to be received, or a CS domain communication service is required to be processed. If a broadcast message is required to be received, step 204 is executed. If a CS domain communication service is required to be processed, step 205 is executed. Otherwise, if it is not required to receive a broadcast message or to process a CS domain communication service, step 206 is executed.
204. Receive and process the broadcast message. Step 206 is executed after the receiving and processing of the broadcast message is completed.

Particularly, as still another particular embodiment of this invention, the operation of step 204 may comprise: receiving a broadcast message, and identifying whether the location area the terminal is located in has changed according to information within the broadcast message; if the location area the terminal is located in has changed, performing location area update for a user card of the terminal. Step 206 is executed after the location area update is completed.

During the processing of the PS domain service, the processing of the PS domain service can be suspended, and a CS domain paging message or a broadcast message can be received, based on which a location area update can be performed for a user card of the terminal, to keep synchronization between the user card and the mobile communication network, so that dropped network connection can be prevented for the user card, and the success rate of a subsequent communication service can be effectively guaranteed.
205. Process the CS domain communication service, for example, a call request service, a short message service, a multimedia message service. Step 206 is executed after the CS domain communication service is completed.

During the processing of the PS domain service, a CS domain paging message can be received and a CS domain communication service can be processed, to support the processing of the CS domain service during the processing of the PS domain service. On the premise that the QoS level of the PS domain service can be effectively guaranteed, the normal processing of the CS domain service can be guaranteed also, so that the QoS and the success rate of the CS domain service can be improved.
206. Resume the processing of the PS domain service.

The processing of the PS domain service can be resumed after the processing of the CS domain paging message is completed to avoid a break in the PS domain service or PS domain data loss, and achieve the continuousness of the PS domain service.

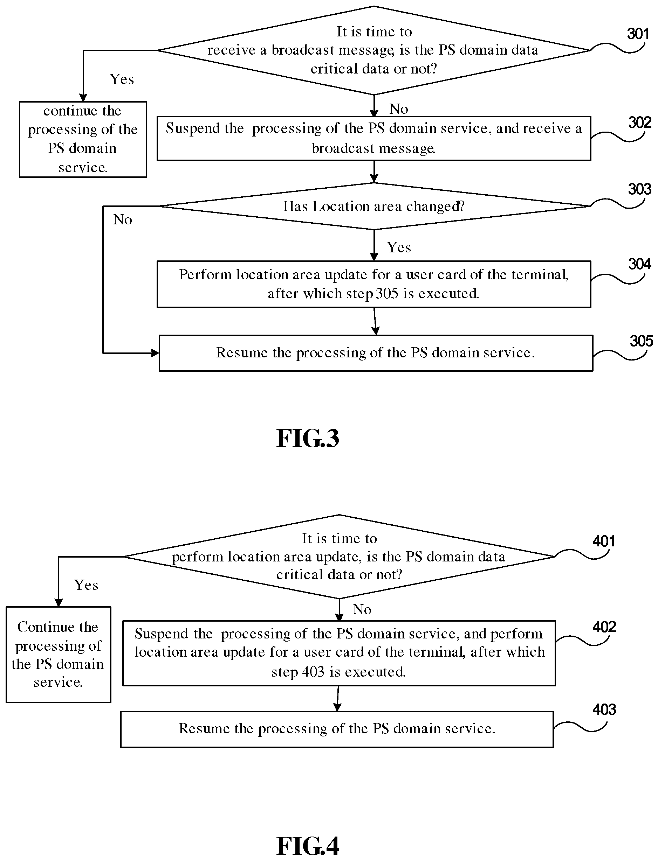

Fig.3 is a flowchart of a service processing method according to still another embodiment of this invention. In this embodiment, a description will be given, in which the CS domain service is a broadcast message as an example. As shown in Fig.3, the service processing method of this embodiment comprises the following steps:
301. In response to a current time for receiving a broadcast message according to a time interval specified in a communication protocol, identify whether PS domain data that is being received/transmitted in a PS domain service currently processed by the terminal is critical data for maintaining the QoS level of the PS domain service. If the PS domain data that is being received/transmitted is not critical data, step 302 is executed; otherwise, if the PS domain data that is being received/transmitted is critical data, the processing of the PS domain service is continued.
302. Suspend the processing of the PS domain service, and receiving a broadcast message.
303. According to information within the broadcast message, identify whether the location area the terminal is located in has changed, if the location area the terminal is located in has changed, step 304 is executed; otherwise, if the location area the terminal is located in has not changed, step 305 is executed.
304. Perform location area update for a user card of the terminal. After the location area update is completed for the user card of the terminal, step 305 is executed.

During the processing of the PS domain service, a broadcast message can be received, and location area update can be performed for the user card of the terminal accordingly, to keep synchronization between the user card and the mobile communication network, so that dropped network connection can be prevented for the user card, and the success rate of a subsequent communication service can be effectively guaranteed.
305. Resume the PS domain service.

The processing of the PS domain service can be resumed after the broadcast message is received and processed to avoid a break in the PS domain service or PS domain data loss, and achieve the continuousness of the PS domain service.

Fig.4 is a flowchart of a service processing method according to still another embodiment of this invention. In this embodiment, a description will be given, in which the CS domain service is location area update as an example. As shown in Fig.4, the service processing method of this embodiment comprises the following steps.
401. In response to a current time for performing location area update according to a time interval specified by a communication protocol, identify whether PS domain data that is being received/transmitted in a PS domain service currently processed by the terminal is critical date for maintaining the QoS level of the PS domain service. If the PS domain data that is being received/transmitted is not critical data, step 402 is executed; otherwise, if the PS domain data that is being received/transmitted is critical data, the processing of the PS domain service is continued.
402. Suspend the PS domain service, and perform location area update for a user card of the terminal, after which step 403 is executed.

During the processing of the PS domain service, location area update can be performed for the user card of the terminal, to keep synchronization between the user card and the mobile communication network, so that dropped network connection can be prevented for the user card, and the success rate of a subsequent communication service can be effectively guaranteed.
403. Resume the PS domain service.

The processing of the PS domain service can be resumed after the location area update is completed for the user card of the terminal, to avoid a break in the PS domain service or PS domain data loss, and achieve the continuousness of the PS domain service.

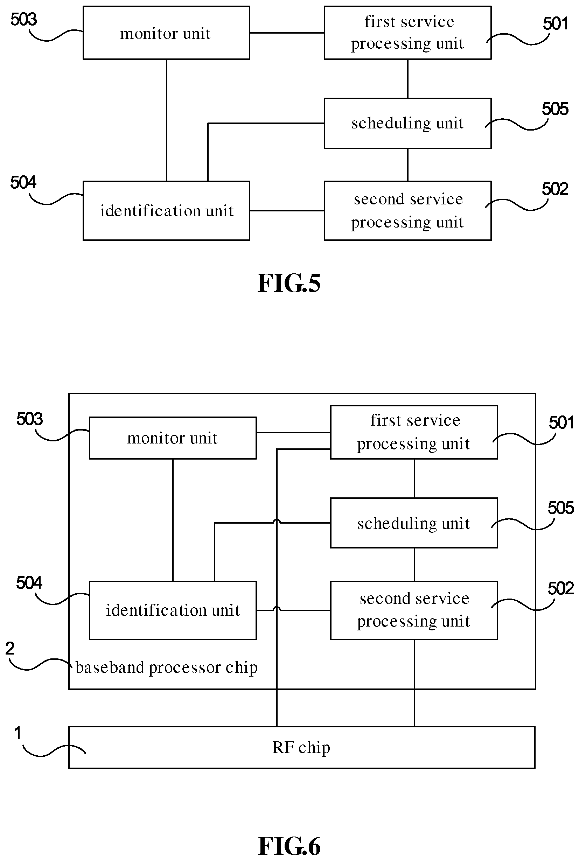

Fig.5 is a schematic structure diagram of a baseband processor chip according to an embodiment of this invention. The baseband processor chip of this embodiment can be used to realize the corresponding flow of a service processing method according to the various embodiments above of this invention. As shown in Fig.5, it comprises a first service processing unit 501, a second service processing unit 502, a monitor unit 503, an identification unit 504, and a scheduling unit 505.

Wherein, the first service processing unit 501 is used to process a CS domain service.

The second service processing unit 502 is used to process a PS domain service.

The monitor unit 503 is used to monitor whether a CS domain service is required to be processed by the first service processing unit 501, for example, a CS domain paging message, a broadcast message, a location area update, etc.

The identification unit 504 is used to according to the monitor result of the monitor unit 503, in response to that the first service processing unit 501 needs to process a CS domain service, identify whether PS domain data being received/transmitted in the PS domain service that is currently processed by the second service processing unit 502 is critical data for maintaining the QoS level of the PS domain service.

According to a specific embodiment of this invention, the PS domain service may be a download or upload service on a mobile communication network, including a process of receiving/transmitting PS domain data, such as instant messaging, webpage browsing, multimedia message transmission and download, etc.

Wherein, critical data is used to maintain the QoS level of the PS domain service, for example data for continuing the PS domain service or keeping the PS domain data transmission rate thereof, wherein the PS domain service cannot be continued or the data transmission rate may have a significant decrease if the critical data is lost. In a particular application, the critical data may be data specified in a communication protocol, or user-specified data.

The scheduling unit 505 is used to, according to the result of the identification unit 504, in response to that the PS domain data being received/transmitted by the second service processing unit 502 is not critical data, instruct the second service processing unit 502 to suspend the processing of the PS domain service, and instruct the first service processing unit 501 to process the CS domain service.

When a CS domain service is required to be processed, the baseband processor chip of the above embodiment of the invention may identify whether PS domain data that is being received/transmitted in a currently processed PS domain service is critical data for maintaining the QoS level of the PS domain service, if the PS domain data that is being received/transmitted is not critical data, the processing of the PS domain service is suspended and the CS domain service is processed, to enable a terminal of Class B to process the CS domain service during the reception/transmission of the PS domain data, so that service quality and user experiment about the CS domain service can be improved; in addition, because the PS domain data that is being received/transmitted is not critical data, suspending the processing of the current PS domain service can not cause the degradation in quality of the PS domain service, such as, the break in the PS domain service or a significant decrease in data transmission speed thereof, so that the service quality of the PS domain service can be effectively guaranteed.

Corresponding to the above embodiment of a service processing method of this invention, according to another particular embodiment of this invention, the scheduling unit 505 is further used to, after the CS domain service has been processed by the first service processing unit 501, instruct the second service processing unit 502 to resume the processing of the PS domain service to avoid a break in the PS domain service or PS domain data loss, and thus to achieve the continuousness of the PS domain service.

Further, according to still another particular embodiment of this invention, receiving/transmitting critical data by the second service processing unit 502 is prior to processing the CS domain service by the first service processing unit 501, that is, the first service processing unit 501 does not process a CS domain service during the process of receiving/transmitting critical data by the second service processing unit 502.

In the baseband processor chip in the above embodiment of this invention, the CS domain service comprises, but not limited to, a CS domain paging message, a broadcast message, location area update etc. Correspondingly, a need for processing a CS domain service by the first service processing unit 501 may particularly comprise: a need for receiving a CS domain service message by the first service processing unit 501, such as, a CS domain paging message, a broadcast message, or a need for processing a specific CS domain service, for example, location area update and other services. Processing a CS domain service by the first service processing unit 501 may correspondingly comprise: by the first service processing unit 501, receiving and processing a CS domain paging message, receiving and processing a broadcast message, performing location area update for a user card of the terminal and the like. When the CS domain service required to be processed is a CS domain paging message, it is believed that the first service processing unit 501 is required to receive and process a CS domain paging message when it is the time to receive a paging message as specified by a paging period, or when a paging indicator indicates that it is required to receive a paging message.

Correspondingly, when the first service processing unit 501 receives and processes a CS domain paging message, it can particularly identify, according to information within the CS domain paging message, whether it is required to receive a broadcast message or to process a CS domain communication service; in response to a need for receiving a broadcast message, the broadcast message is received and processed; in response to a need for processing a CS domain communication service, for example, a call request service, a short message service, a multimedia message service, the CS domain communication service is processed.

Optionally, receiving and processing a broadcast message by the first service processing unit 501 may particularly comprise: receiving a broadcast message, and identifying whether the location area the terminal is located in has changed according to information within the broadcast message; in response to a change of the location area the terminal is located in, performing location area update for a user card of the terminal.

During the processing of the PS domain service by the second service processing unit 502, the first service processing unit 501 may receive a CS domain paging message or a broadcast message, and perform location area update for the user card of the terminal accordingly, to keep synchronization between the user card and the mobile communication network, so that dropped network connection can be prevented for the user card, and the success rate of a subsequent communication service can be effectively guaranteed.

Further, in the baseband processor chip according to the above embodiment of this invention, a need for processing a CS domain service by the first service processing unit 501 may further comprise a time that is coming for receiving a broadcast message or performing location area update according to a time interval specified in a communication protocol. Correspondingly, processing a CS domain service by the first service processing unit 501 comprises: receiving and processing the broadcast message, or performing location area update for the user card of the terminal.

Fig.6 is a schematic structure diagram of a terminal according to an embodiment of this invention. The terminal provided in this embodiment may be a terminal of Class B, which employs a single RF single baseband scheme to achieve the flows of the service processing methods according to the various above embodiments of this invention. As shown in Fig. 6, it comprises a RF chip 1 and a baseband processor chip 2.

Wherein, the RF chip 1 is used to realize the reception and transmission of data or a message between the baseband processor chip 2 and a communication network, for example, to forward PS domain data between a General Packet Radio Service (GPRS) network and the second service processing unit 502 of the baseband processor chip 2, to forward a CS domain service message, CS domain service data etc between a GMS network and the first service processing unit 501 of the baseband processor chip 2.

The baseband processor chip 2 is used to in response to a need for processing a CS domain service, identify PS domain data that is being received/transmitted in a currently processed PS domain service is critical data for maintaining the QoS level of the PS domain service, and in response to the PS domain data being received/transmitted is not critical data, suspend the processing of the PS domain service and process the CS domain service.

Wherein, the baseband processor chip 2 may particularly comprise the baseband processor chip provided in any embodiment shown in Fig.5, and is realized with the structure of the embodiment shown in Fig.5 of this invention.

With the terminal provided in the above embodiment of this invention, when a CS domain service is required to be processed, the baseband processor chip 2 can identify whether PS domain data that is being received/transmitted in a currently processed PS domain service is critical data, if the PS domain data that is being received/transmitted is not critical data, the processing of the PS domain service is suspended and the CS domain service is processed. As a terminal of Class B, it is enabled to process the CS domain service during the reception/transmission of the PS domain data, so that service quality and user experiment about the CS domain service can be improved; in addition, because the PS domain data that is being received/transmitted is not critical data, suspending the processing of the current PS domain service will not cause the degradation in QoS level of the PS domain service, such as, a break in the PS domain service or a significant decrease in data transmission speed thereof, so that the service quality of the PS domain service can be effectively guaranteed.

Those skilled in the art may understand that embodiments of this invention may not be necessarily implemented by or limited to the component units of the baseband processor chip and the terminal in various above embodiments of this invention, for example, the terminal may be further provided with user card slots, a display, a keyboard, an antenna or other peripheral devices according to actual requirements. In addition, the component units of the baseband processor chip may be further distributed into other component units of the terminal according to actual requirements. Among the component units of the baseband processor chip, several component units can be combined into a single unit, or a component unit can be divided into several subunits. In addition, the connection relationships between various component units of the baseband processor chip, and the connection relationships between the component units of the baseband processor chip and other component units of the terminal merely represent exemplary information flow directions, but not physical connection relationships, and are not necessarily required or limitations for the implementation of the embodiments.

Various embodiments of this invention have been described in a progressive manner, wherein each embodiment has been emphasized in view of differences from other embodiments. A mutual reference can be made to various embodiments for the same or similar portions thereof. With respect to the baseband processor chip and the terminal eobodiments, due to the correspondence to the method embodiments thereof, only a simple description is given, refer to those method embodiments for related portions.

Those skilled in the art may appreciate: some or all steps of the above method embodiments can be realized by program instructions related hardware, the program aforementioned can be stored in a computer readable storage medium, the program, when executed, may execute steps of the above method embodiments; the storage medium aforementioned includes ROM, RAM, magnetic disc or optical disc and other mediums capable of storing program code.

The embodiments of this invention enable a terminal of Class B to process a CS domain service during the process of receiving/transmitting PS domain data, so that service quality and user experiment of the CS domain service can be improved; in addition, because the PS domain data that is being received/transmitted is not critical data, suspending the processing of the current PS domain service will not cause the degradation in QoS level of the PS domain service, such as, the break of the PS domain service or a significant decrease in data transmission speed thereof, so that the service quality of the PS domain service can be effectively guaranteed.

## Claims

1. A service processing method performed by a terminal, **characterized by** comprising:
in response to a need for processing a Circuit Switched, CS, domain service by the terminal, identifying whether Packet Switched, PS, domain data that is received/transmitted in a PS domain service being currently processed by the terminal is critical data for maintaining the QoS level of the PS domain service, wherein the critical data is used to maintain the QoS level of the PS domain service, wherein the PS domain service cannot be continued or the data transmission rate has a significant decrease if the critical data is lost, and wherein a need for processing a CS domain service comprises: a time for receiving a paging message as specified by a paging period arriving, or a paging indicator indicating it is required to receive a paging message, or a time for receiving a broadcast message or a time for performing location area update according to a time interval specified in a communication protocol arriving;
in response to that the PS domain data being received/transmitted is not critical data, suspending the processing of the PS domain service and processing the CS domain service, wherein processing the CS domain service correspondingly comprises: receiving and processing a CS domain paging message, receiving and processing the broadcast message, or performing location area update for the user card of the terminal; and
resuming the processing of the PS domain service after the processing of the CS domain service.

2. The method according to claim 1, **characterized in that** the reception/transmission of the critical data is prior to the processing of the CS domain service.

3. The method according to claim 1, **characterized in that** the critical data is data specified by a communication protocol or user specified data.

4. The method according to claim 1, **characterized in that** receiving and processing the CS domain paging message comprises:
receiving the CS domain paging message;
according to information within the CS domain paging message, identifying whether it is required to receive a broadcast message or process a CS domain communication service;
in response to that it is required to receive a broadcast message, receiving and processing the broadcast message;
in response to that it is required to process a CS domain communication service, processing the CS domain communication service.

5. The method according to claim 4, **characterized in that** receiving and processing the broadcast message comprises:
receiving the broadcast message, and identifying whether the location area the terminal is located in has changed according to information within the broadcast message;
in response to the location area the terminal is located in has changed, performing location area update for a user card of the terminal.

6. The method according to claim 1, **characterized in that** receiving and processing the broadcast message comprises:
receiving the broadcast message, and identifying whether the location area the terminal is located in has changed according to information within the broadcast message;
in response to that the location area the terminal is located in has changed, performing location area update for the user card of the terminal.

7. A baseband processor chip (2), **characterized by** comprising:
a first service processing unit (501), for processing a CS domain service;
a second service processing unit (502), for processing a PS domain service;
a monitor unit (503), for monitoring whether the first service processing unit (501) needs to process a CS domain service, wherein a need for processing a CS domain service comprises: a time for receiving a paging message as specified by a paging period arriving, or a paging indicator indicating it is required to receive a paging message, or a time for receiving a broadcast message or a time for performing location area update according to a time interval specified in a communication protocol arriving;
an identification unit (504), for according to the monitor result of the monitor unit, in response to a need for processing a CS domain service by the first service processing unit (501), identifying whether PS domain data being received/transmitted in the PS domain service that is currently processed by the second service processing unit (502) is critical data for maintaining a QoS level of the PS domain service, wherein the critical data is used to maintain the QoS level of the PS domain service, wherein the PS domain service cannot be continued or the data transmission rate has a significant decrease if the critical data is lost; and
a scheduling unit (505), for according to the identification result of the identification unit (504), in response to the PS domain data that is being received/transmitted is not critical data, instructing the second service processing unit (502) to suspend the processing of the PS domain service, and instructing the first service processing unit (501) to process the CS domain service, wherein processing the CS domain service correspondingly comprises: receiving and processing a CS domain paging message, receiving and processing the broadcast message, or performing location area update for the user card of the terminal;
wherein the scheduling unit (505) is further used to after the CS domain service has been processed by the first service processing unit (501), instruct the second service processing unit (502) to resume the processing of the PS domain service.

8. The baseband processor chip (2) according to claim 7, **characterized in that** the receiving/transmitting of critical data by the second service processing unit (502) is prior to the processing of the CS domain service performed by the first service processing unit (501).

9. The baseband processor chip (2) according to claim 7, **characterized in that** the critical data is data specified by a communication protocol or user specified data.

10. The baseband processor chip (2) according to claim 7, **characterized in that** when receiving and processing the CS domain paging message, the first service processing unit (501) is particularly used to receiving the CS domain paging message; according to information within the CS domain paging message, identify whether it is required to receive a broadcast message or process a CS domain communication service; in response to that it is required to receive a broadcast message, receive and process the broadcast message; in response to that it is required to process a CS domain communication service, process the CS domain communication service.

11. The baseband processor chip (2) according to claim 10, **characterized in that** when receiving and processing the broadcast message, the first service processing unit (501) is particularly used to receive the broadcast message, and identify whether the location area the terminal is located in has changed according to information within the broadcast message; in response to that the location area the terminal is located in has changed, perform location area update for a user card of the terminal.

12. A terminal, comprising a RF chip (1) and a baseband processor chip (2) according to any one of claim 7 to claim 11.

## Patentansprüche

1. Dienstbearbeitungsverfahren ausgeführt durch einen Terminal, **dadurch gekennzeichnet, dass** es umfasst:
als Antwort auf einen Bedarf zur Bearbeitung eines leitungsvermittelten, CS, Domaindiensts durch den Terminal, Bestimmen, ob eine paketvermittelte, PS, Domaindatei, welche in einem PS Domaindienst, der gerade durch den Terminal bearbeitet wird, empfangen/übertragen wird, eine kritische Datei für die Aufrechterhaltung der QoS Ebene des PS Domaindienstes ist, wobei die kritische Datei zur Aufrechterhaltung der QoS Ebene des PS Domaindienstes verwendet wird, wobei der PS Domaindienst nicht fortgesetzt werden kann, oder die Datenübertragungsrate eine bedeutende Senkung erlebt, wenn die kritische Datei verloren geht, und wobei ein Bedarf zur Bearbeitung eines CS Domaindienstes umfasst: einen Zeitpunkt zum Empfangen einer Paging-Nachricht, wie festgelegt durch einen ankommenden Paging-Zeitraum, oder einen Paging-Anzeiger, der anzeigt, dass es erforderlich ist, eine Paging-Nachricht zu empfangen, oder einen Zeitpunkt zum Empfangen einer Broadcast-Nachricht oder einen Zeitpunkt zum Ausführen einer Aufenthaltsbereichsaktualisierung gemäß einem Zeitintervall, das in einem ankommenden Kommunikationsprotokoll festgelegt wird;
als Antwort darauf, dass die PS Domaindatei, welche empfangen/übertragen wird, keine kritische Datei ist, Aussetzen der Bearbeitung des PS Domaindienstes und Bearbeiten des CS Domaindienstes, wobei die Bearbeitung des CS Domaindienstes entsprechend umfasst: Empfangen und Bearbeiten einer CS Domain-Paging-Nachricht, Empfangen und Bearbeiten der Broadcast-Nachricht, oder Ausführen einer Aufenthaltsbereichsaktualisierung für die Benutzerkarte des Terminals; und
Fortsetzen der Bearbeitung des PS Domaindienstes nach der Bearbeitung des CS Domaindienstes.

2. Verfahren gemäß Anspruch 1, **dadurch gekennzeichnet, dass** der Empfang/die Übertragung der kritischen Datei vor der Bearbeitung des CS Domaindienstes erfolgt.

3. Verfahren gemäß Anspruch 1, **dadurch gekennzeichnet, dass** die kritische Datei eine Datei ist, welche durch einen Kommunikationsprotokoll oder eine benutzerspezifizierte Datei festgelegt ist.

4. Verfahren gemäß Anspruch 1, **dadurch gekennzeichnet, dass** Empfangen und Bearbeiten der CS Domain-Paging-Nachricht umfasst:
Empfangen der CS Domain-Paging-Nachricht;
gemäß einer Information innerhalb der CS Domain-Paging-Nachricht, Bestimmen, ob es erforderlich ist, eine Broadcast-Nachricht zu empfangen oder eine CS Domainkommunikationsdienst zu bearbeiten;
als Antwort darauf, dass es erforderlich ist, eine Broadcast-Nachricht zu empfangen, Empfangen und Bearbeiten der Broadcast-Nachricht;
als Antwort darauf, dass es erforderlich ist, einen CS Domainkommunikationsdienst zu bearbeiten, Bearbeiten des CS Domainkommunikationsdienstes.

5. Verfahren gemäß Anspruch 4, **dadurch gekennzeichnet, dass** Empfangen und Bearbeiten der Broadcast-Nachricht umfasst:
Empfangen der Broadcast-Nachricht, und Bestimmen, ob sich der Aufenthaltsbereich, in dem sich der Terminal befindet, laut Informationen innerhalb der Broadcast-Nachricht geändert hat;
als Antwort darauf, dass sich der Aufenthaltsbereich, in dem sich das Terminal befindet, geändert hat, Ausführen einer Aufenthaltsbereichsaktualisierung für eine Benutzerkarte des Terminals.

6. Verfahren gemäß Anspruch 1, **dadurch gekennzeichnet, dass** Empfangen und Bearbeiten der Broadcast-Nachricht umfasst:
Empfangen der Broadcast-Nachricht, und Bestimmen, ob sich der Aufenthaltsbereich, in dem sich der Terminal befindet, laut Informationen innerhalb der Broadcast-Nachricht geändert hat;
als Antwort darauf, dass sich der Aufenthaltsbereich, in dem sich das Terminal befindet, geändert hat, Ausführen einer Aufenthaltsbereichsaktualisierung für die Benutzerkarte des Terminals.

7. Basisbandprozessorchip (2), **dadurch gekennzeichnet, dass** er umfasst:
eine erste Dienstbearbeitungseinheit (501) zum Bearbeiten eines CS Domaindienstes;
eine zweite Dienstbearbeitungseinheit (502) zum Bearbeiten eines PS Domaindienstes;
eine Überwachungseinheit (503) zum Überwachen, ob die erste Dienstbearbeitungseinheit (501) benötigt, einen CS Domaindienst zu bearbeiten, wobei ein Bedarf zur Bearbeitung eines CS Domaindienstes umfasst: einen Zeitpunkt zum Empfangen einer Paging-Nachricht wie festgelegt durch einen ankommenden Paging-Zeitraum, oder einen Paging-Anzeiger, der anzeigt, dass es erforderlich ist, eine Paging-Nachricht zu empfangen, oder einen Zeitpunkt zum Empfangen einer Broadcast-Nachricht oder einen Zeitpunkt zum Ausführen einer Aufenthaltsbereichsaktualisierung gemäß einem Zeitintervall, das in einem ankommenden Kommunikationsprotokoll festgelegt wird;
eine Bestimmungseinheit (504) zum Bestimmen, gemäß dem Überwachungsergebnis der Überwachungseinheit, als Antwort auf einen Bedarf zur Bearbeitung eines CS Domaindienstes durch die erste Dienstbearbeitungseinheit (501), ob PS Domaindatei, welche in dem PS Domaindienst, der gerade durch die zweite Dienstbearbeitungseinheit (502) bearbeitet wird, empfangen/übertragen wird, kritische Datei für die Aufrechterhaltung der QoS Ebene des PS Domaindienstes ist, wobei die kritische Datei zur Aufrechterhaltung der QoS Ebene des PS Domaindienstes verwendet wird, wobei der PS Domaindienst nicht fortgesetzt werden kann oder die Datenübertragungsrate eine bedeutende Senkung erlebt, wenn die kritische Datei verloren geht; und
eine Zeitplanungseinheit (505) zum Anweisen, gemäß dem Bestimmungsergebnis der Bestimmungseinheit (504), als Antwort darauf, dass die PS Domaindatei, welche empfangen/übertragen wird, keine kritische Datei ist, der zweiten Dienstbearbeitungseinheit (502), die Bearbeitung des PS Domaindienstes auszusetzen, und zum Anweisen der ersten Dienstbearbeitungseinheit (501), den CS Domaindienst auszuführen, wobei die Ausführung des CS Domaindienstes entsprechend umfasst: Empfangen und Bearbeiten einer CS Domain-Paging-Nachricht, Empfangen und Bearbeiten der Broadcast-Nachricht, oder Ausführen einer Aufenthaltsbereichsaktualisierung für die Benutzerkarte des Terminals;
wobei die Zeitplanungseinheit (505) weiter verwendet wird, um die zweite Dienstbearbeitungseinheit (502) anzuweisen, die Bearbeitung des PS Domaindienstes fortzusetzen, nachdem der CS Domaindienst durch die erste Dienstbearbeitungseinheit (501) bearbeitet wurde.

8. Basisbandprozessorchip (2) gemäß Anspruch 7, **dadurch gekennzeichnet, dass** das Empfangen/das Übertragen der kritischen Datei durch die zweite Dienstbearbeitungseinheit (502) vor der Bearbeitung des CS Domaindienstes, die durch die erste Dienstbearbeitungseinheit ausgeführt wird, erfolgt.

9. Basisbandprozessorchip (2) gemäß Anspruch 7, **dadurch gekennzeichnet, dass** die kritische Datei eine Datei ist, welche durch einen Kommunikationsprotokoll oder eine benutzerspezifizierte Datei bestimmt ist.

10. Basisbandprozessorchip (2) gemäß Anspruch 7, **dadurch gekennzeichnet, dass**, wenn sie die CS Domain-Paging-Nachricht empfängt und bearbeitet, die erste Dienstbearbeitungseinheit (501) insbesondere dazu verwendet wird, die CS Domain-Paging-Nachricht zu empfangen; gemäß einer Information innerhalb der CS Domain-Paging-Nachricht, zu bestimmen, ob es erforderlich ist, eine Broadcast-Nachricht zu empfangen oder einen CS Domainkommunikationsdienst zu bearbeiten; als Antwort darauf, dass es benötigt wird, eine Broadcast-Nachricht zu empfangen, die Broadcast-Nachricht zu empfangen und zu bearbeiten; als Antwort darauf, dass es erforderlich ist, einen CS Domainkommunikationsdienst zu bearbeiten, den CS Domainkommunikationsdienst zu bearbeiten.

11. Basisbandprozessorchip (2) gemäß Anspruch 10, **dadurch gekennzeichnet, dass**, wenn sie die Broadcast-Nachricht empfängt und bearbeitet, die erste Dienstbearbeitungseinheit (501) insbesondere dazu verwendet wird, die Broadcast-Nachricht zu empfangen, und zu bestimmen, ob sich der Aufenthaltsbereich, in dem sich der Terminal befindet, laut Informationen innerhalb der Broadcast-Nachricht geändert hat; als Antwort darauf, dass sich der Aufenthaltsbereich, in dem sich das Terminal befindet, geändert hat, eine Aufenthaltsbereichsaktualisierung für eine Benutzerkarte des Terminals auszuführen.

12. Terminal, umfassend einen RF Chip (1) und einen Basisbandprozessorchip (2) gemäß einem der Ansprüche 7 bis 11.

## Revendications

1. Procédé de traitement de service mis en oeuvre par un terminal, **caractérisé en ce qu'**il comprend des étapes consistant à :
- en réponse à un besoin de traiter un service de domaine à commutation de circuits CS par le terminal, identifier si des données de domaine à commutation par parquets PS qui sont reçues transmises dans un service de domaine PS actuellement traitées par le terminal sont des données critiques pour maintenir le niveau de qualité QoS du service de domaine PS, les données critiques étant utilisées pour maintenir le niveau de QoS du service de domaine PS, le service de domaine PS ne pouvant pas être poursuivi, ou la vitesse de transmission des données diminuant de manière significative si les données critiques sont des données perdues, et un besoin de traitement d'un service de domaine PS comprenant :
- un temps de réception d'un message de radiomessagerie tel que spécifié par l'arrivée d'une période de radiomessagerie ou un indicateur de radiomessagerie indiquant qu'il est demandé de recevoir un message de radiomessagerie, ou un temps de réception d'un message diffusé, ou un temps pour effectuer une mise à jour de la zone de localisation conformément à un intervalle de temps spécifié dans un protocole de communication arrivant,
- en réponse au fait que les données de domaine PS reçues/transmises ne sont pas des données critiques, suspendre le traitement du service de domaine PS et traiter le service de domaine CS, le traitement du service de domaine CS comprenant de manière correspondant des étapes consistant à :
- recevoir et traiter un message de radiomessagerie de domaine PS, recevoir et traiter le message diffusé, ou effectuer une mise à jour de la zone de localisation de la carte d'usager du terminal, et
- reprendre le traitement du service de domaine PS après le traitement du service de domaine CS.

2. Procédé conforme à la revendication 1,
**caractérisé en ce que**
la réception/transmission des données critiques est antérieure au traitement du service de domaine CS.

3. Procédé conforme à la revendication 1,
**caractérisé en ce que**
les données critiques sont des données précisées par un protocole de communication ou des données précisées d'usager.

4. Procédé conforme à la revendication 1,
**caractérisé en ce que**
l'étape consistant à recevoir et à traiter le message de radiomessagerie de domaine CS comprend des étapes consistant à :
recevoir le message de radiomessagerie de domaine CS,
conformément à l'information, contenue dans le message de radiomessagerie de domaine PS, identifier si, il est demandé de recevoir un message diffusé, ou de traiter un service de communication de domaine PS, en réponse au fait qu'il est demandé de recevoir un message diffusé, recevoir et traiter le message diffusé,
en réponse au fait qu'il est demandé de traiter un service de communication de domaine PS, traiter le service de communication de domaine CS.

5. Procédé conforme à la revendication 4,
**caractérisé en ce que**
l'étape de réception et de traitement du message diffusé comprend des étapes consistant à :
recevoir le message diffusé et identifier si la zone de localisation dans laquelle le terminal est situé a changé conformément à l'information contenue dans le message diffusé,
en réponse au fait que la zone de localisation dans laquelle le terminal est situé a changé, effectuer une mise à jour de la zone de localisation d'une carte d'usager du terminal.

6. Procédé conforme à la revendication 1,
**caractérisé en ce que**
l'étape de réception et de traitement du message diffusé comprend des étapes consistant à :
recevoir le message diffusé et identifier si la zone dans laquelle le terminal est situé a changé conformément à l'information contenue dans le message diffusé,
en réponse au fait que la zone dans laquelle le terminal est situé a changé, effectuer une mise a à jour de la zone de localisation de la carte d'usager du terminal.

7. Puce de processeur de bande de base (2),
**caractérisée en ce qu'**elle comporte :
une première unité de traitement de service (501), permettant de traiter un service de domaine CS,
une seconde unité de traitement de service (502), permettant de traiter un service de domaine PS,
une unité de contrôle (503), pour contrôler si la première unité de traitement de service (501) doit traiter un service de domaine CS, un besoin de traitement d'un service de domaine CS comprenant :
un temps de réception d'un message de radiomessagerie tel que précisé par l'arrivée d'une période de radiomessagerie, ou un indicateur de radiomessagerie indiquant qu'il est demandé de recevoir un message de radiomessagerie, ou un temps de réception d'un message radio diffusé, ou un temps pour effectuer la mise à jour d'une zone de localisation conformément à un intervalle de temps précisé dans un protocole de communication arrivant,
une unité d'identification (504) permettant, conformément au résultat du contrôle, en réponse à un besoin de traiter un service de domaine CS par la première unité de traitement de service (501), d'identifier si des données de domaine PS reçues/transmises dans le service de domaine PS qui sont actuellement traitées par la seconde unité de traitement de service (502) sont des données critiques pour permettre de maintenir le niveau de QoS du service de domaine PS, les données critiques étant utilisées pour maintenir le niveau de QoS du service de domaine PS, le service de domaine PS ne pouvant pas être poursuivi, ou la vitesse de transmission des données diminuant de façon significative si les données critiques sont des données perdues, et
une unité d'exploitation (505) permettant, conformément au résultat d'identification de l'unité d'identification (504), en réponse au fait que les données de domaine PS qui sont reçues/transmises ne sont pas de données critiques, donner instruction à la seconde unité de traitement de service (502) de suspendre le traitement du service de domaine PS, et donner instruction à la première unité de traitement de service (501) de traiter le service de domaine CS, le traitement du service de domaine CS comprenant, de façon correspondant des étapes consistant à :
recevoir et traiter un message de radiomessagerie de domaine PS, recevoir et traiter le message diffusé, ou effectuer une mise à jour de la zone de localisation de la carte d'usager du terminal,
l'unité d'exploitation (505), étant en outre utilisée, après que le service de domaine CS ait été traité par la première unité de traitement de service (501), pour donner instruction à la seconde unité de traitement de service (502) de reprendre le traitement du service de domaine PS.

8. Puce de processeur de bande de base (2) conforme à la revendication 7,
**caractérisée en ce que**
l'étape de réception/transmission de données critiques par la seconde unité de traitement de service (502) est antérieure au traitement du service de domaine CS mis en oeuvre par la première unité de traitement de service (501).

9. Puce de processeur de bande de base (2) conforme à la revendication 7,
**caractérisée en ce que**
les données critiques sont des données précisées par un protocole de communication ou des données précisées d'utilisateur.

10. Puce de processeur de bande de base (2) conforme à la revendication 7,
**caractérisé en ce que**
lorsqu'elle reçoit et traite le message de radiomessagerie de domaine CS, la première unité de traitement de service (501) est en particulier utilisée pour recevoir le message de radiomessagerie de domaine CS, pour conformément à l'information contenue dans le message de radiomessagerie de domaine PS, identifier si, il est demandé de recevoir un message diffusé ou de traiter un service de communication de domaine CS, pour en réponse au fait qu'il est demandé de recevoir un message diffusé, recevoir et traiter le message diffusé, et pour en réponse au fait qu'il est demandé de traiter un service de communication de domaine CS, traiter le service de communication de domaine CS.

11. Puce de processeur de bande de base (2) conforme à la revendication 10,
**caractérisé en ce que**
lorsqu'elle reçoit et traite le message diffusé, la première unité de traitement de service (501) est en particulier utilisée pour recevoir le message diffusé et identifier si la zone de localisation dans laquelle le terminal est situé a changé conformément à l'information contenue dans le message diffusé, et pour en réponse au fait que la zone de localisation dans laquelle est situé le terminal a changé, effectuer une mise à jour de la zone de localisation de la carte d'usager du terminal.

12. Terminal comprenant une puce RF (1) et une puce de processeur de bande de base (2) conforme à l'une quelconque des revendications 7 à 11.
